(19) Europäisches Patentamt
European Patent Office
Office européen des brevets

(11) Publication number: **0 530 205 B1**

(12) # EUROPEAN PATENT SPECIFICATION

(45) Date of publication of patent specification: **28.12.94** (51) Int. Cl.$^5$: **C09D 5/14**

(21) Application number: **91907604.2**

(22) Date of filing: **09.04.91**

(86) International application number:
**PCT/GB91/00561**

(87) International publication number:
**WO 91/15546 (17.10.91 91/24)**

(54) **ANTIFOULING COATING COMPOSITIONS.**

(30) Priority: **10.04.90 GB 9008053**

(43) Date of publication of application:
**10.03.93 Bulletin 93/10**

(45) Publication of the grant of the patent:
**28.12.94 Bulletin 94/52**

(84) Designated Contracting States:
**DE DK ES FR GB GR IT NL SE**

(56) References cited:
**EP-A- 0 204 456**
**EP-A- 0 342 276**

(73) Proprietor: **COURTAULDS COATINGS (HOLDINGS) LIMITED**
**50 George Street**
**London W1A 2BB (GB)**

(72) Inventor: **GREEN, Georgina, Elizabeth**
**10 South Fork**
**Lemington Rise**
**Newcastle-upon-Tyne NE15 8TZ (GB)**
Inventor: **REID, James**
**150C Whitehall Road**
**Gateshead**
**Tyne and Wear NE8 1TP (GB)**
Inventor: **ARNOLD, David, Edward, James**
**132 Moorside North**
**Fenham**
**Newcastle-upon-Tyne NE4 9DY (GB)**
Inventor: **HUNTER, Julian, Edward**
**32 Elsing Close**
**Meadow Rise**
**Kenton**
**Newcastle-upon-Tyne NE5 4SW (GB)**

(74) Representative: **Hale, Stephen Geoffrey et al**
**J.Y. & G.W. Johnson**
**Furnival House**
**14/18 High Holborn**
**London WC1V 6DE (GB)**

**EP 0 530 205 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Technical Field

This invention is concerned with antifouling coating compositions used on surfaces likely to come into contact with marine fouling organisms such as algae, seaweed and barnacles, for example on ships or boats or on the outfalls for cooling water from power stations. Such coating compositions generally comprise a biocide for marine organisms and a binder polymer.

### Background Art

There have been many suggestions in recent years for self-polishing antifouling paints having binders which are linear polymers containing pendent side groups which are liberated from the polymer by reaction with seawater, the residual polymer being sufficiently dispersible or soluble in seawater to be swept away from the paint surface, exposing a fresh layer of the binder able to undergo a similar reaction with seawater. Such paints are described for example in GB-A-1457590. The gradual thinning of the paint film controls the release of a biocide active against fouling. The only commercially significant self-polishing paints employ binders which comprise triorganotin ester leaving groups.

EP-A-204456 describes a hydrolysable resin for use in antifouling coatings consisting of a resin having at least one side chain bearing at least one terminal group of the formula:

$-X-(-O-M-R)_x$

wherein X represents :

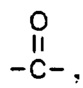 , 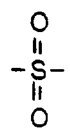 , 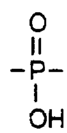 or 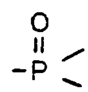 ;

M is a metal selected from zinc, copper and tellurium;
x is an integer of 1 to 2; R represents an organic acid residue selected from:

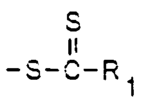 , 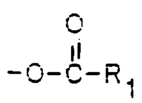 , 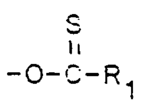 , $-O-R_1$ , $-S-R_1$ or 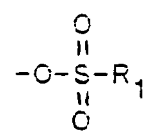 ;

and $R_1$ is a monovalent organic residue.

EP-A-342276 describes a process for preparing such a metal-containing resin composition comprising reacting a mixture of:

(A) an acid group-containing resin;

(B) a metallic salt of a low-boiling organic acid, in which the metal is selected from those having 2 or more valences and a lesser ionization tendency than those of alkali metals; and

(C) a high-boiling organic monobasic acid; at an elevated temperature while removing the formed low-boiling organic basic acid out of the system.

US-A-2490925 discloses a pest-control composition comprising stabilised rosin amine or a co-ordinate covalent metal salt thereof dispersed in kerosine, gasoline, benzene, alcohol, acetone, water or pine oil. The composition is stated to be particularly effective as a fungicide. The composition can be added to marine paint containing a dehydroabietylamine complex of copper acetate.

JP-A-54-64633 describes a marine antifouling biocide which is a long-chain (12 to 18 carbon atoms) linear aliphatic primary amine or salt thereof. JP-A-54-110322 describes certain long-chain (12 to 18 carbon atoms) linear aliphatic secondary and tertiary amines as marine antifouling agents.

US-A-4675051 describes a marine antifouling paint which is gradually dissolved in seawater and which comprises a binder which is a resin produced by the reaction of rosin and an aliphatic polyamine containing

at least one primary or secondary amine group.

Disclosure of the invention

An antifouling coating composition according to the present invention contains a biocide for marine organisms and comprises as binder a hydrolysable resin having at least one side-chain bearing at least one terminal group of the formula:

$-X-(-O-M-R)_x$

wherein X represents

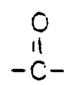, 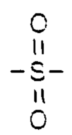, 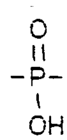 or 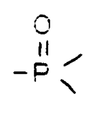.

M represents a metal having a valency of at least 2, x represents 1 or 2, and
R represents a monobasic organic acid residue,
and is characterised in that it contains a substantially non-volatile amine.

In the hydrolysable resin the metal M can for example be selected from the following groups of the Periodic Table:
Ib(e.g. Cu), IIa (e.g. Ca, Ba), IIb (e.g. Zn, Cd), IIIa (e.g. Sc, Y), IIIb (e.g. Al, In), IVa (e.g. Ti, Zr), IVb (e.g. Sn, Pb, Si), Va (e.g. V, Nb), VIa (e.g. Cr, Mo, W), VIb (e.g. Se, Te), VIIa (e.g. Mn) and VIII (e.g. Fe, Co, Ni). The metal M is preferably divalent, for example copper, zinc, nickel, cobalt or manganese, in which case x is 1. Copper and zinc are particularly preferred metals.

The linkage X is preferably a

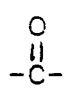

linkage. The hydrolysable resin can for example be produced by the process of EP-A-342276 by reacting an acid group-containing base resin, preferably a carboxylic-acid-containing resin, with a metallic salt of a low-boiling organic acid and with a high-boiling organic monobasic acid.

The base resin containing acid groups is preferably a carboxylic-acid-functional polymer of equivalent weight 240 to 600. A preferred acid-functional polymer is an addition copolymer of one or more olefinically unsaturated acids or anhydrides, for example acrylic acid, methacrylic acid, maleic acid, maleic anhydride, fumaric acid, itaconic acid or itaconic anhydride, vinyl benzoic acid (for example p-vinyl benzoic acid), 3-butenoic acid or beta-carboxy-ethyl acrylate or methacrylate, with at least one olefinically unsaturated comonomer. Copolymers of methacrylic acid or acrylic acid are preferred. (The preferred equivalent weight of 240 to 600 corresponds to an acrylic acid content of 14.3 to 35.8% by weight and a methacrylic acid content of 16.7 to 41.7% by weight). The acid monomer is preferably copolymerised with one or more comonomers which are unreactive with acid groups, for example acrylic or methacrylic esters such as methyl acrylate, methyl methacrylate, ethyl acrylate, butyl acrylate or 2-ethylhexyl methacrylate, styrene, acrylonitrile, vinyl acetate, vinyl butyrate, vinyl chloride, or vinyl pyridine. Terpolymers may be preferred, for example methyl methacrylate or ethyl methacrylate, which tend to form a hard film, can be used in conjunction with an acrylate such as ethyl acrylate or particularly an alkyl acrylate of 3 to 8 carbon atoms in the alkyl moiety such as butyl acrylate, which helps to form a more flexible film. Such an acid polymer preferably has a molecular weight of 1,000 to 100,000. The equivalent weight of the acid polymer (calculated as acid groups) is most preferably 300 to 440, equivalent to an acrylic acid or methacrylic acid content of about 20 to 30% by weight.

Alternative carboxylic acid-functional polymers are alkyd resins.

Alternative acid-functional polymers are polymers containing sulphonic acid, phosphonic acid or phosphoric acid (acid phosphate) groups. If alternative acid groups are used they are also preferably present in an addition polymer, for example an addition copolymer of an olefinically unsaturated

phosphonic, phosphoric or sulphonic acid. Examples of such unsaturated acids are vinyl phosphonic acid, styrene phosphonic acid, 2-acrylamidopropane phosphonic acid, ethylidene-1, 1-diphosphonic acid, hydroxyethyl acrylate monophosphate, vinyl sulphonic acid, 2-acrylamido-2-methylpropane sulphonic acid, methallyl sulphonic acid and styrene sulphonic acid. Polymers containing stronger acid groups such as sulphonic acid groups may have a higher equivalent weight, for example in the range 500 to 5000, preferably 1000 to 2000.

The monobasic organic acid residue R which is incorporated in the hydrolysable resin is preferably selected from:

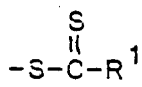 , 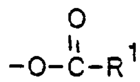 , 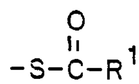 , 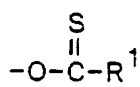 ,

$-O-R^1$, $-S-R^1$, and

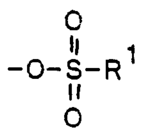 ,

wherein $R^1$ represents a monovalent organic residue linked through a carbon atom. The group $R^1$ can alternatively represent an amino group.

When the process of EP-A-342276 is used, the metallic salt which is reacted with the base resin and the high-boiling acid is a salt of the metal M and a low-boiling organic acid such as acetic acid or propionic acid. The high-boiling acid RH, whose residue R is incorporated in the hydrolysable resin, preferably has a boiling point at least 20 °C higher than that of the low-boiling organic acid. The high-boiling acid RH can be a carboxylic sulphonic, thiocarboxylic, thionocarboxylic, carbamic, thiocarbamic, thionocarbamic, dithiocarboxylic or dithiocarbamic acid. The acid RH is preferably a carboxylic acid, most preferably an aliphatic carboxylic acid having at least 8, for example 12 to 20, carbon atoms, for example lauric, stearic, oleic, linoleic, ricinoleic or 12-hydroxystearic acid; alternative carboxylic acids include benzoic, salicylic, nitrobenzoic, chloroacetic, dichloroacetic or chlorobenzoic acid. The acid can be a mixture of carboxylic acids such as the mixed aliphatic carboxylic acids sold as naphthenic acid or versatic acid, or a mixture of acids derived from a natural fat or oil. Alternative acids include toluenesulphonic, beta-naphthalenesulphonic, p-chlorobenzenesulphonic, dimethyldithiocarbamic and diethyldithiocarbamic acid.

The base resin, metallic salt and high-boiling acid are generally reacted at a temperature above the boiling point of the low-boiling acid but below the boiling point of the high-boiling acid to form the hydrolysable resin. The reaction is preferably carried out in an organic solvent, for example a hydrocarbon such as xylene or trimethylbenzene, a ketone such as methyl isoamyl ketone or an ester such as butyl acetate, ethoxyethyl acetate or methoxypropyl acetate.

The amine used in the coating composition is substantially non-volatile at ambient temperature (20 °C) and standard pressure. Preferably, it has a boiling point of at least 200 °C, most preferably at least 250 °C. The amine is preferably a monoamine and is preferably a primary amine, although a secondary or tertiary amine can be used. The amine preferably includes at least one organic group containing at least 10 carbon atoms, more preferably 12 to 20 carbon atoms. Such amines generally have the advantage that they are toxic to marine organisms. The amine can for example be a diterpene-derived amine of the formula:

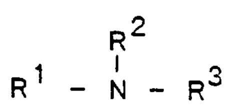

where $R^1$ is a monovalent hydrocarbon group derived from a diterpene and $R^2$ and $R^3$ are each independently hydrogen, an alkyl group having 1 to 18 carbon atoms or an aryl group having 6 to 12 carbon atoms. Such an amine is preferably derived from rosin. A primary amine derived from rosin is dehydroabietylamine sold commercially as "Rosin Amine D". Its main constituent is:

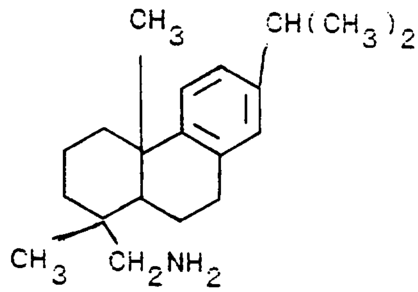

A corresponding secondary or tertiary amine, for example an N-methyl or N,N-dimethyl derivative of Rosin Amine D, can alternatively be used. The diterpene amines are effective marine biocides. The amine can alternatively be an aliphatic amine containing an organic group of 12 to 20 carbon atoms, for example a straight-chain alkyl or alkenyl primary amine such as dodecyl amine, hexadecyl amine, octadecyl amine or oleyl amine or mixtures of amines derived from aliphatic groups present in natural fats and oils such as tallow amine or hydrogenated tallow amine or coconut amine (coco-amine) or a corresponding secondary amine or tertiary amine such as N-methyl dodecyl amine or N,N-dimethyl coco-amine. The long chain aliphatic amines having 12 to 16 carbon atoms are very effective marine biocides. Alternative amines which can be used are aralkylamines such as those sold commercially as "phenalkamines", or hydroxy-substituted amines such as triethanolamine or diethanolamine.

The antifouling coating composition is preferably applied as a solution in an organic solvent, for example a hydrocarbon such as xylene or white spirit, a ketone such as methyl isobutyl ketone or methyl isoamyl ketone, an alcohol such as n-butanol, ethoxyethanol or methoxypropanol or an ester such as butyl acetate, ethoxyethyl acetate or methoxypropyl acetate. When the hydrolysable resin binder is prepared in an organic solvent the resin solution can be used directly in preparing the paint. It can optionally be diluted by further solvent, preferably selected from the solvents listed above.

The non-volatile amine has the advantage that it reduces the viscosity of solutions of the hydrolysable resin in organic solvents such as those listed above. The amine is believed to react at least in part to form a co-ordination complex with the metal M in the hydrolysable resin. In the co-ordination complex the metal M may be co-ordinately bonded both to the amine as ligand and to an anion, for example a carboxylate anion, acting as organic acid residue R. For those metals which form coloured hydrolysable resin solutions complex formation can be seen by a colour change. Solutions of hydrolysable resin in which the metal M is copper, for example, are generally green in the absence of amine but change colour to blue when the amine is added. The amine can reduce the viscosity of the hydrolysable resin solution by a factor of up to 4. The amine can thus be used with hydrolysable resin solutions which without amine are too viscous to form the basis of a sprayable paint, that is hydrolysable resin solutions which have an increased resin content. For example, the amine can be added to hydrolysable resin solutions having a resin content of 30 to 35 per cent by volume to produce solutions whose viscosity is equal to that of hydrolysable resin solutions without amine having a resin content of 25 to 30 per cent by volume. Moreover, since the amine is non-volatile it also directly increases the non-volatile content of the coating composition. There has been recent pressure for the use of a reduced content of volatile organic solvent in various types of coating compositions.

The proportion of hydrolysable resin to amine in the coating composition is preferably from 98:2 to 10:90 by volume, most preferably from 90:10 to 30:70. Amines having no film-forming properties are preferably used at no more than 40% based on the combined weight of polymer and amine, whereas film-forming amines such as the diterpene derivatives can be used at a higher proportion if desired. More than one amine can be used; for example a diterpene amine can be used with a long-chain aliphatic amine.

If an amine which is biocidal to marine organisms is used, the resulting coating composition comprising hydrolysable resin and amine can be used as a clear antifouling varnish or can be pigmented. If the metal M in the hydrolysable resin is a metal which is toxic to marine organisms, for example copper, it can augment the marine biocidal properties of the coating, although since the metal content of the hydrolysable resin is only for example 10 to 15% by weight its effect may not be large.

If a non-biocidal amine is used the coating composition should contain a marine biocide. The coating preferably contains a pigment, and the same material may function simultaneously as a marine biocide and as a pigment if a biocidal pigment is used.

The amine is preferably pre-mixed with the hydrolysable resin binder before addition of other components of the coating. The hydrolysable resin binder solution can alternatively be mixed simultaneously with the amine and with the pigment. For example, the hydrolysable resin solution and the amine can be mixed with pigment using conventional paint blending procedures to provide a composition having a pigment volume concentration of, for example, 25 to 55%. The pigment is preferably a sparingly soluble pigment having a solubility in seawater of from 0.5 to 100, most preferably 1 to 10, parts per million by weight, and is preferably a metalliferous pigment. The pigment is most preferably a copper or zinc compound, for example cuprous oxide, cuprous thiocyanate, zinc oxide, zinc dimethyl dithiocarbamate, zinc diethyl dithiocarbamate, cuprous ethylene bis(dithiocarbamate) and zinc ethylene bis(dithiocarbamate). These sparingly soluble pigments which are copper and zinc compounds are generally also marine biocides. The sparingly soluble metalliferous pigments produce water-soluble metal compounds on reaction with seawater so that the pigment particles do not survive at the paint surface. Mixtures of sparingly soluble pigments can be used, for example cuprous oxide, cuprous thiocyanate or zinc ethylene bis-(dithiocarbamate), which are highly effective biocidal pigments, can be mixed with zinc oxide, which is less effective as a biocide but dissolves slightly more rapidly in seawater.

The paint composition can additionally or alternatively contain a pigment which is not reactive with seawater and may be highly insoluble in seawater (solubility below 0.5 part per million by weight) such as titanium dioxide or ferric oxide or an organic pigment such as a phthalocyanine pigment. Such highly insoluble pigments are preferably used at less than 40% by weight of the total pigment component of the paint, most preferably less than 20%.

The anti-fouling paint can also contain a non-metalliferous biocide for marine organisms, for example tetramethyl thiuram disulphide, methylene bis(thiocyanate), captan, a substituted isothiazolone, for example as described in GB-A-1575226, or 2-methylthio-4-t-butylamino-6-cyclopropylamino-s-triazine.

The invention is illustrated by the following Examples:

**Examples 1 to 4**

A 28.9% by volume solution A in a 4:1 xylene:butanol mixture of a hydrolysable resin based on a methacrylic acid copolymer with acrylate and methacrylate esters, in which the pendent carboxylic groups derived from the methacrylic acid had been converted to

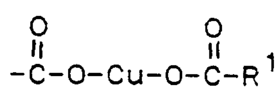

groups, wherein $R^1$ is derived from a high boiling aliphatic carboxylic acid (naphthenic acid or similar), was mixed with Rosin Amine D in the proportions shown in Table 1 below. The ratio of mixing is quoted as a volume ratio of hydrolysable resin to Rosin Amine D on a dry weight basis. The green resin solution and colourless amine formed a blue solution, the blue colour being most intense at a mixing ratio of 40:60 (Example 3).

Table 1

| Example No. | Mixing Ratio | Solids Content % by volume | Viscosity in mPa s |
|---|---|---|---|
| (A) | 100:0 | 28.9 | 240 |
| 1 | 80:20 | 33.7 | 90 |
| 2 | 60:40 | 40.4 | 90 |
| 3 | 40:60 | 50.4 | 190 |
| 4 | 20:80 | 67.0 | 190 |

As shown in Table 1, the addition of Rosin Amine D decreased the viscosity of the hydrolysable resin solution (Rosin Amine D is itself a viscous liquid resin of viscosity well above 1000 mPa s). The products of Examples 1 to 4 can be used as clear antifouling varnishes. Alternatively, they can be mixed with pigments, for example biocidal pigments known for use in antifouling paints such as cuprous oxide, cuprous thiocyanate or zinc ethylene bis(dithiocarbamate).

**Examples 5 to 12**

The process of Examples 1 to 4 was repeated using two different hydrolysable resin solutions, each being acrylic resins containing pendent groups of the form:

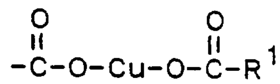

The viscosities after mixing are shown in Table 2. The hydrolysable resin solution B of Examples 5 to 8 had a solids content of 27.6% by volume and the solution C of Examples 9 to 12 a solids content of 29.5% by volume.

Table 2

| Example No. | Mixing Ratio | Solids Content % by volume | Viscosity in mPa s |
|---|---|---|---|
| (B) | 100:0 | 27.6 | 240 |
| 5 | 80:20 | 32.3 | 100 |
| 6 | 60:40 | 38.9 | 100 |
| 7 | 40:60 | 48.8 | 260 |
| 8 | 20:80 | 65.6 | 290 |
| (C) | 100:0 | 29.5 | 360 |
| 9 | 80:20 | 34.3 | 110 |
| 10 | 60:40 | 41.0 | 120 |
| 11 | 40:60 | 51.1 | 180 |
| 12 | 20:80 | 67.6 | 280 |

**Examples 13 to 21**

Hydrolysable resin solution (A, B or C above), pigment and Rosin Amine D were mixed by conventional paint mixing technology in a high-speed disperser to form paints of the compositions shown in Table 3 (amounts of ingredients in % by weight).

The paints of Examples 13 to 21 were applied to primed steel panels and were immersed in seawater in an area rich in marine fouling. After 12 months' immersion they resisted fouling by algae and animal fouling, whereas a non-toxic comparison panel showed heavy fouling.

The paints of Examples 19, 20 and 21 were applied as test patches below the waterline on the side of the hull of an oil tanker. After 11 months in service, mainly in tropical latitudes, the test patches were substantially free from algal and animal fouling, whereas a neighbouring patch not coated with antifouling paint was heavily fouled.

**Table 3**

| Example No. | 13 | 14 | 15 | 16 | 17 | 18 | 19 | 20 | 21 |
|---|---|---|---|---|---|---|---|---|---|
| Hydrolysable Resin Solution | 21.52(A) | 22.47(B) | 22.99(C) | 26.38(A) | 24.23(B) | 24.64(C) | 33.13(A) | 34.12(B) | 32.83(C) |
| Rosin Amine D | 5.03 | 7.00 | 6.46 | 5.14 | 6.29 | 5.77 | 6.64 | 6.54 | 6.67 |
| Chlorinated paraffin plasticiser | 3.48 | 4.07 | 4.07 | 3.95 | 4.01 | 4.02 | - | - | - |
| Cuprous Oxide | 46.55 | 54.48 | 54.49 | 52.89 | 53.66 | 53.75 | 54.05 | 53.25 | 54.29 |
| Titanium Dioxide | 2.87 | 3.35 | 3.35 | 3.26 | 3.30 | 3.31 | - | - | - |
| Red Iron Oxide | - | - | - | - | - | - | 4.16 | 4.10 | 4.18 |
| Structuring Agents (bentonite, clay and silica) | 1.74 | 2.04 | 2.04 | 1.98 | 2.01 | 2.01 | 2.02 | 2.00 | 2.03 |
| Methyl isobutyl ketone | 10.46 | 3.66 | 3.67 | 3.56 | 3.61 | 3.62 | - | - | - |
| Xylene | 8.36 | 2.93 | 2.93 | 2.85 | 2.89 | 2.89 | - | - | - |
| Volume ratio of hydrolysable resin to amine | 56:44 | 49:51 | 53:47 | 61:39 | 53:47 | 56:44 | 60:40 | 60:40 | 60:40 |
| % solids content by volume | 38.3 | 53.0 | 53.1 | 50.0 | 51.4 | 51.7 | 53.2 | 51.6 | 53.9 |
| Paint viscosity (poise) | - | - | - | - | - | - | 4.4 | 5.5 | 6.9 |

## Claims

**1.** An antifouling coating composition containing a biocide for marine organisms and comprising as binder a hydrolysable resin having at least one side-chain bearing at least one terminal group of the formula

$-X-(-O-M-R)_x$

wherein X represents :

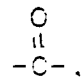, 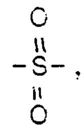, 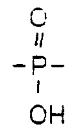 or 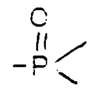,

M represents a metal having a valency of at least 2,
x represents 1 or 2, and R represents a monobasic organic acid residue, characterised in that the coating composition contains a substantially non-volatile amine.

**2.** An antifouling coating composition according to claim 1, in which X represents

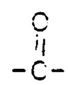,

characterised in that the hydrolysable resin is derived from a carboxylic-acid-functional polymer of acid equivalent weight 240 to 600.

**3.** An antifouling coating composition according to claim 1 or claim 2, characterised in that the metal M is copper or zinc and x is 1.

**4.** An antifouling coating composition according to any of claims 1 to 3, characterised in that the monobasic organic acid residue R is selected from:

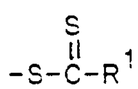, 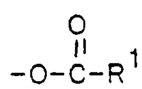, 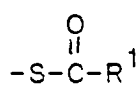, 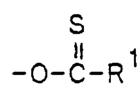,

$-O-R^1$, $-S-R^1$, and

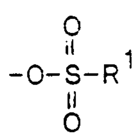,

wherein $R^1$ represents a monovalent organic residue linked through a carbon atom.

**5.** An antifouling coating composition according to claim 4, characterised in that the monobasic organic acid residue R is the residue of an aliphatic carboxylic acid having at least 8 carbon atoms.

**6.** An antifouling coating composition according to any of claims 1 to 5, characterised in that the substantially non-volatile amine includes at least one organic group having at least 10 carbon atoms.

**7.** An antifouling coating composition according to claim 6, characterised in that the said organic group having at least 10 carbon atoms is derived from a diterpene.

**8.** An antifouling coating composition according to claim 6, characterised in that the substantially non-volatile amine is an aliphatic amine containing an organic group of 12 to 20 carbon atoms.

9. An antifouling coating composition according to any of claims 1 to 8, characterised in that the proportion of hydrolysable resin to amine in the coating composition is from 90:10 to 30:70 by volume.

10. An antifouling coating composition according to any of claims 1 to 9, characterised in that the amine is present at least partly as a ligand in a co-ordination complex with the metal M in the hydrolysable resin.

11. An antifouling coating composition according to any of claims 1 to 10; characterised in that it contains a pigment which is a copper or zinc compound having a solubility in seawater of from 0.5 to 100 parts per million by weight.

12. A process for preparing an antifouling coating composition containing a biocide for marine organisms and comprising as binder a hydrolysable resin having at least one side chain bearing at least one terminal group of the formula:

$-X-(-O-M-R)_x$

wherein X represents :

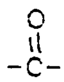 , 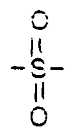 , 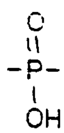 or 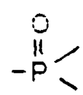 ,

M represents a metal having a valency of at least 2,
x represents 1 or 2, and R represents a monobasic organic
acid residue, characterised in that a substantially non-volatile amine is incorporated into the composition.

13. A process according to claim 12, characterised in that the amine forms a co-ordination complex with the metal M in the hydrolysable resin.

**Patentansprüche**

1. Bewuchsverhindernde Beschichtungszusammensetzung, enthaltend ein Biozid für Meeresorganismen sowie als Bindemittel ein hydrolisierbares Harz mit mindestens einer Seitenkette, die mindestens eine Endgruppe der Formel

$-X-(-O-M-R)_x$

worin x:

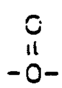 . 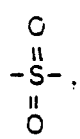 , 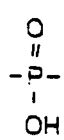 or 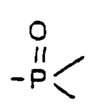 .

M ein Metall mit einer Wertigkeit von mindestens 2,
x 1 oder 2 und R einen monobasischen organischen Säurerest darstellen, trägt, dadurch gekennzeichnet, daß die Beschichtungszusammensetzung ein im wesentlichen nichtflüchtiges Amin enthält.

2. Bewuchsverhindernde Beschichtungszusammensetzung nach Anspruch 1, worin x

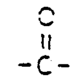

darstellt, dadurch gekennzeichnet, daß sich das hydrolisierbare Harz von einem carbonsäurefunktionellen Polymeren mit einem Säureäquivalentgewicht von 240 bis 600 ableitet.

3. Bewuchsverhindernde Beschichtungszusammensetzung nach Anspruch 1 oder 2, dadurch gekennzeichnet, daß das Metall M Kupfer oder Zink und x 1 ist.

4. Bewuchsverhindernde Beschichtungszusammensetzung nach einem der Ansprüche 1 bis 3, dadurch gekennzeichnet, daß der monobasische organische Säurerest R unter

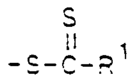 , 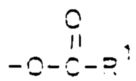 , 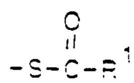 , 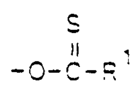 ,

-O-R$^1$, -S-R$^1$ und

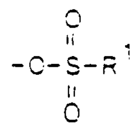

ausgewählt ist,
wobei R$^1$ einen über ein Kohlenstoffatom gebundenen einwertigen organischen Rest darstellt.

5. Bewuchsverhindernde Beschichtungszusammensetzung nach Anspruch 4, dadurch gekennzeichnet, daß der monobasische organische Säurerest R der Rest einer aliphatischen Carbonsäure mit mindestens 8 Kohlenstoffatomen ist.

6. Bewuchsverhindernde Beschichtungszusammensetzung nach einem der Ansprüche 1 bis 5, dadurch gekennzeichnet, daß das im wesentlichen nichtflüchtige Amin mindestens eine organische Gruppe mit mindestens 10 Kohlenstoffatomen einschließt.

7. Bewuchsverhindernde Beschichtungszusammensetzung nach Anspruch 6, dadurch gekennzeichnet, daß sich diese organische Gruppe mit mindestens 10 Kohlenstoffatomen von einem Diterpen ableitet.

8. Bewuchsverhindernde Beschichtungszusammensetzung nach Anspruch 6, dadurch gekennzeichnet, daß das im wesentlichen nichtflüchtige Amin ein aliphatisches Amin mit einer organischen Gruppe mit 12 bis 20 Kohlenstoffatomen ist.

9. Bewuchsverhindernde Beschichtungszusammensetzung nach einem der Ansprüche 1 bis 8, dadurch gekennzeichnet, daß das Verhältnis des hydrolisierbaren Harzes zu Amin in der Beschichtungszusammensetzung volumenmäßig 90:10 bis 30:70 beträgt.

10. Bewuchsverhindernde Beschichtungszusammensetzung nach einem der Ansprüche 1 bis 9, dadurch gekennzeichnet, daß das Amin zumindest teilweise als Ligand in einem Koordinationskomplex mit dem Metall M im hydrolisierbaren Harz vorliegt.

11. Bewuchsverhindernde Beschichtungszusammensetzung nach einem der Ansprüche 1 bis 10, dadurch gekennzeichnet, daß sie ein Pigment enthält, welches eine Kupfer- oder Zinkverbindung mit einer Löslichkeit von 0,5 bis 100 Gewichtsteilen pro Million in Meerwasser ist.

12. Verfahren zur Herstellung einer bewuchsverhindernden Beschichtungszusammensetzung, enthaltend ein Biozid für Meeresorganismen und als Bindemittel ein hydrolisierbares Harz mit mindestens einer Seitenkette, die mindestens eine Endgruppe der Formel

-X-(-O-M-R)$_x$

worin x:

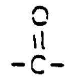, 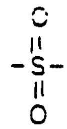, 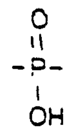 or 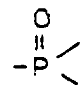 ,

M ein Metall mit einer Wertigkeit von mindestens 2,
x 1 oder 2 und R einen monobasischen organischen Säurerest darstellen, trägt, dadurch gekennzeichnet, daß man ein im wesentlichen nichtflüchtiges Amin in die Zusammensetzung einbaut.

13. Verfahren nach Anspruch 12, dadurch gekennzeichnet, daß das Amin mit dem Metall M im hydrolisierbaren Harz einen Koordinationskomplex bildet.

**Revendications**

1. Composition de revêtement anti-salissures, contenant un biocide pour organismes marins et comprenant, comme liant, une résine hydrolysable possédant au moins une chaîne latérale portant au moins un groupe terminal de la formule:

-X-(-O-M-R)$_x$

dans laquelle X représente:

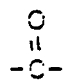. 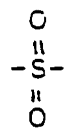; 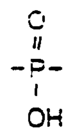 cr 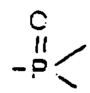 ;

M représente un métal possédant une valence d'au moins 2,
x représente 1 ou 2, et R représente un résidu monoacide organique, caractérisée en ce que la composition de revêtement contient une amine essentiellement non volatile.

2. Composition de revêtement anti-salissures selon la revendication 1, dans laquelle X représente

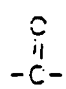 ; ,

caractérisée en ce que la résine hydrolysable est dérivée d'un polymère à fonctions acides carboxyliques ayant un poids d'équivalent acide de 240 à 600.

3. Composition de revêtement anti-salissures selon la revendication 1 ou la revendication 2, caractérisée en ce que le métal M est le cuivre ou le zinc et x est égal à 1.

4. Composition de revêtement anti-salissures selon l'une quelconque des revendications 1 à 3, caractérisée en ce que le résidu monoacide organique R est choisi parmi:

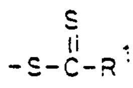, 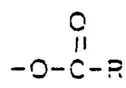, 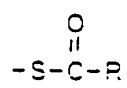, 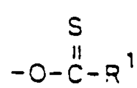,

-O-$R^1$, -S-$R^1$, and

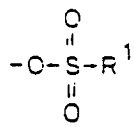.

où $R^1$ représente un résidu organique monovalent lié par l'intermédiaire d'un atome de carbone.

**5.** Composition de revêtement anti-salissures selon la revendication 4, caractérisée en ce que le résidu monoacide organique R est le résidu d'un acide carboxylique aliphatique possédant au moins 8 atomes de carbone.

**6.** Composition de revêtement anti-salissures selon l'une quelconque des revendications 1 à 5, caractérisée en ce que l'amine essentiellement non volatile renferme au moins un groupe organique possédant au moins 10 atomes de carbone.

**7.** Composition de revêtement anti-salissures selon la revendication 6, caractérisée en ce que ledit groupe organique possédant au moins 10 atomes de carbone est dérivé d'un diterpène.

**8.** Composition de revêtement anti-salissures selon la revendication 6, caractérisée en ce que l'amine essentiellement non volatile est une amine aliphatique contenant un groupe organique de 12 à 20 atomes de carbone.

**9.** Composition de revêtement anti-salissures selon l'une quelconque des revendications 1 à 8, caractérisée en ce que la proportion de résine hydrolysable par rapport à l'amine dans la composition de revêtement est de 90:10 à 30:70 en volume.

**10.** Composition de revêtement anti-salissures selon l'une quelconque des revendications 1 à 9, caractérisée en ce que l'amine est présente dans la résine hydrolysable au moins partiellement en tant que ligand d'un complexe de coordination avec le métal M.

**11.** Composition de revêtement anti-salissures selon l'une quelconque des revendications 1 à 10, caractérisée en ce qu'elle contient un pigment qui est un composé de cuivre ou de zinc ayant une solubilité dans l'eau de mer de 0,5 à 100 parties par million, en poids.

**12.** Procédé de préparation d'une composition de revêtement anti-salissures contenant un biocide pour organismes marins et comprenant, comme liant, une résine hydrolysable possédant au moins une chaîne latérale portant au moins un groupe terminal de formule:

$-X-(-O-M-R)_x$

dans laquelle X représente :

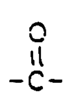, 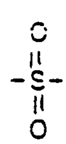, 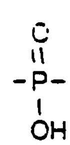 cr 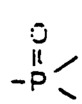,

M représente un métal possédant une valence d'au moins 2,
x représente 1 ou 2, et R représente un résidu monoacide organique, caractérisé en ce que l'on incorpore, dans la composition, une amine essentiellement non volatile.

**13.** Procédé selon la revendication 12, caractérisé en ce que l'amine forme, dans la résine hydrolysable, un complexe de coordination avec le métal M.